(19) Europäisches Patentamt
European Patent Office
Office européen des brevets

(11) **EP 2 618 500 A1**

(12) **EUROPEAN PATENT APPLICATION**
published in accordance with Art. 153(4) EPC

(43) Date of publication:
**24.07.2013 Bulletin 2013/30**

(51) Int Cl.:
*H04B 7/10* (2006.01)    *H04J 99/00* (2009.01)
*H04W 16/28* (2009.01)

(21) Application number: **11824997.8**

(22) Date of filing: **01.09.2011**

(86) International application number:
**PCT/JP2011/069958**

(87) International publication number:
**WO 2012/035991 (22.03.2012 Gazette 2012/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.09.2010 JP 2010204535**

(71) Applicant: **NTT DoCoMo, Inc.**
**Tokyo 100-6150 (JP)**

(72) Inventors:
• **OHWATARI, Yusuke**
**Tokyo 100-6150 (JP)**
• **MIKI, Nobuhiko**
**Tokyo 100-6150 (JP)**
• **ABE, Tetsushi**
**Tokyo 100-6150 (JP)**
• **OKUMURA, Yukihiko**
**Tokyo 100-6150 (JP)**

(74) Representative: **HOFFMANN EITLE**
**Patent- und Rechtsanwälte**
**Arabellastrasse 4**
**81925 München (DE)**

(54) **WIRELESS COMMUNICATION CONTROL METHOD, WIRELESS COMMUNICATION SYSTEM, WIRELESS BASE STATION AND MOBILE TERMINAL**

(57)    In each Mobile terminal, channel impulse characteristics from radio base stations to the mobile terminal is calculated. In a radio communication system, under the assumption that each of the mobile terminals performs optimum receiving beamforming in order to receive a data signal from a radio base station that actually sends the data signal to the mobile terminal, optimum receiving beamforming characteristics are estimated for each mobile terminal. Each of radio base stations that share optimum receiving beamforming characteristics calculates precoding characteristics for each mobile terminal according to the optimum receiving beamforming characteristics such that main beams are directed to mobile terminals to which the radio base station sends data signals and null beams are directed to mobile terminals to which the radio base station does not send data signals.

FIG. 4

EP 2 618 500 A1

**Description**

Technical Field

The present invention relates to radio communication control methods, radio communication systems, radio base stations, and mobile terminals.

Background Art

The Third Generation Partnership Project (3GPP) has discussed the application of a technology called Coordinated Multiple Point Transmission and Reception (CoMP) for Long Term Evolution (LTE) Advanced (see Section 8, Non-Patent Document 1, for example).
Downlink CoMP is a technology in which a plurality of radio base stations mutually coordinate in order to send data signals to mobile terminals (user equipment, UE). Downlink CoMP is roughly divided into Coordinated Scheduling/ Beamforming (CS/CB) and Joint Processing (JP).
In CS/CB in downlink CoMP, a data signal exists only in a transmission-source radio base station to which transmission-destination UE is connected. In CS/CB, however, information (channel quality information and the like) about all UEs connected to a radio base station serving as a data-signal transmission source and to one or more radio base stations that coordinate with the radio base station is shared by these radio base stations, and these radio base stations mutually coordinate to perform scheduling or beamforming in order to send a data signal to each UE. In other words, each of a plurality of coordinating radio base stations sends data signals to UEs in the cell of the radio base station, and the plurality of coordinating radio base stations share channel quality information and the like related to the UEs in order to perform appropriate data-transmission scheduling and appropriate data-transmission beamforming.
In JP in downlink CoMP, the plurality of coordinating radio base stations share data signals to be sent to all UEs connected to these radio base stations, in addition to the channel quality information and the like. These radio base stations mutually coordinate to send the data signals to the UEs. For example, two or three radio base stations send data signals to a single UE at the same time.
CoMP is based on Multiple Input Multiple Output (MIMO). When a single radio base station communicates with a plurality of mobile terminals, multi-user MIMO is used.
In multi-user MIMO, linear precoding is used at access points in order to increase the directivity of a transmission signal to direct the main beam (main lobe) toward the transmission destination (see Non-Patent Document 2, for example). Linear precoding includes zero-forcing precoding and minimum mean square error (MMSE) precoding. Linear precoding at a transmission-source access point makes the UEs spatially orthogonal (divides the UEs spatially) according to the channel impulse characteristics of the downlinks to the UEs from the access point, the channel impulse characteristics being fed back from the UEs. In other words, control is performed according to the reception states of the UEs such that the directions of the main beams formed by an adaptive array antenna at the transmission-source access point are directed toward transmission-destination UEs.

Prior Art Documents

Non-Patent Document

Non-Patent Document 1: 3GPP TR 36.814 V9.0.0 (2010-03), 3rd Generation Partnership Project; Technical Specification Group Radio Access Network; Evolved Universal Terrestrial Radio Access (E-UTRA); "Further advancements for E-UTRA physical layer aspects", March, 2010
Non-Patent Document 2: An Introduction to the Multi-User MIMO Downlink, Quentin H. Spencer and three others, IEEE Communications Magazine, pp. 60-67, October, 2004

Summary of Invention

Technical Problem

To use MIMO precoding in CS/CB in downlink CoMP, a radio base station calculates precoding characteristics for each UE according to the downlink channel characteristics. For example, to calculate precoding characteristics, it is expected under the assumption that all UEs (including UEs connected to other radio base stations) are connected to each radio base station, that each radio base station estimates the receiving beamforming characteristics for all the UEs. Then, it is expected that precoding characteristics are calculated according to the receiving beamforming characteristics for two or more UEs such that the transmission main beams are directed only to the UEs that are the actual destinations to which the data signals should be transmitted and null beams are directed to the other UEs.

In that case, however, the directivity of the receiving beamforming actually executed by the UE does not match the direction of the transmission main beams formed by precoding at the radio base station. Therefore, the signal actually received by the UE deteriorates.

Accordingly, the present invention provides a radio communication control method, a radio communication system, a radio base station, and a mobile terminal capable of increasing the calculation precision of precoding characteristics for a mobile terminal in CS/CB in downlink CoMP.

Solution to Problem

A radio communication control method according to the present invention is executed in a radio communication system provided with a plurality of mobile terminals and a plurality of radio base stations communicating with the mobile terminals by radio. The radio communication control method includes calculating, in each of the mobile terminals, channel impulse characteristics of downlinks from the radio base stations to the mobile terminal; estimating optimum receiving beamforming characteristics for each of the mobile terminals according to, among the channel impulse characteristics, the channel impulse characteristics of the downlink through which the mobile terminal actually receives a data signal; sharing the optimum receiving beamforming characteristics for each of the mobile terminals among some of the plurality of radio base stations; and calculating, in each of the some of the plurality of radio base stations that share the optimum receiving beamforming characteristics, precoding characteristics for each of the mobile terminals according to the optimum receiving beamforming characteristics such that main beams are directed to mobile terminals to which the radio base station sends data signals and null beams are directed to mobile terminals to which the radio base station does not send data signals.

In the present invention, the optimum receiving beamforming characteristics are estimated for each of the mobile terminals according to, among the downlink channel impulse characteristics, the channel impulse characteristics of the downlink through which the mobile terminal actually receives the data signal in the radio communication system. In other words, it is assumed that, in order that each of the mobile terminals receive a downlink data signal from a radio base station that actually sends the data signal to the mobile terminal, the mobile terminal performs receiving beamforming that is optimum only for the radio base station to which the mobile terminal is connected. The optimum receiving beamforming characteristics are estimated for each of the mobile terminals according to the channel impulse characteristics required under this assumption. The optimum receiving beamforming characteristics estimated in this manner are shared by a plurality of radio base stations. Each of the radio base stations calculates the precoding characteristics for each of the mobile terminals according to the optimum receiving beamforming characteristics (that include the optimum receiving beamforming characteristics for transmission-destination mobile terminals to which the radio base station actually sends data signals and the optimum receiving beamforming characteristics for mobile terminals to which the radio base station does not actually send data signals) such that main beams are directed to the mobile terminals to which the radio base station sends the data signals and null beams are directed to mobile terminals to which the radio base station does not send data signals. Therefore, the precoding characteristics calculated by the radio base station match the optimum receiving beamforming characteristics for the mobile terminals. In CS/CB in downlink CoMP, it is possible to increase the calculation precision of the precoding characteristics for each mobile terminal.

The precoding characteristics may be calculated for each of the mobile terminals, in each of the some of the plurality of radio base stations, according to the optimum receiving beamforming characteristics for transmission-destination mobile terminals to which the radio base station actually sends data signals, the channel impulse characteristics of the downlinks through which the radio base station actually sends the data signals to the transmission-destination mobile terminals, the optimum receiving beamforming characteristics for other mobile terminals to which the radio base station does not actually send data signals, and the channel impulse characteristics of the downlinks to the other mobile terminals.

By calculating the precoding characteristics in this manner, the radio base stations can have high-precision precoding characteristics.

In an aspect, estimating the optimum receiving beamforming characteristics may be that each of the radio base stations estimates the optimum receiving beamforming characteristics for transmission-destination mobile terminals to which the radio base station actually sends data signals, according to the channel impulse characteristics of the downlinks between the transmission-destination mobile terminals and the radio base station, the channel impulse characteristics being reported from the transmission-destination mobile terminals to the radio base station, and sharing the optimum receiving beamforming characteristics may be that each of the some of the plurality of radio base stations signals the estimated optimum receiving beamforming characteristics to another radio base station of the some of the plurality of radio base stations.

In other words, each of the radio base stations may estimate optimum receiving beamforming characteristics only for mobile terminals to which the radio base station is connected. In that case, when each of the radio base stations signals the estimated optimum receiving beamforming characteristics to another radio base station, each of the radio base stations mutually coordinating can recognize the optimum receiving beamforming characteristics for a mobile terminal connected to the other radio base station.

In another aspect, estimating the optimum receiving beamforming characteristics and sharing the optimum receiving beamforming characteristics may be achieved by that each of the radio base stations estimates the optimum receiving beamforming characteristics for transmission-destination mobile terminals to which the radio base station actually sends data signals, according to the channel impulse characteristics of the downlinks between the transmission-destination mobile terminals and the radio base station, and also estimates the optimum receiving beamforming characteristics for other mobile terminals according to the channel impulse characteristics of the downlinks between the other mobile terminals and another radio base station.

In other words, each of the radio base stations may calculate not only the optimum receiving beamforming characteristics for the mobile terminals to which the radio base station is connected, but also the optimum receiving beamforming characteristics for mobile terminals to which another radio base station is connected. In that case, the radio base stations can recognize, independently of each other, the optimum receiving beamforming characteristics for mobile terminals located in a plurality of cells.

In another aspect, estimating the optimum receiving beamforming characteristics may be that each of the mobile terminals estimates the optimum receiving beamforming characteristics for the mobile terminal according to the channel impulse characteristics of the downlink through which the mobile terminal actually receives a data signal among the channel impulse characteristics calculated by the mobile terminal, and sharing the optimum receiving beamforming characteristics may include that each of the mobile terminals reports the optimum receiving beamforming characteristics for the mobile terminal to a radio base station, and the radio base station signals the optimum receiving beamforming characteristics reported from the mobile terminal to another radio base station.

In other words, each mobile terminal may estimate optimum receiving beamforming characteristics for the mobile terminal according to the channel impulse characteristics calculated in the mobile terminal. In that case, each mobile terminal estimates, independently from each other, the optimum receiving beamforming characteristics for the mobile terminal and reports the optimum receiving beamforming characteristics to the radio base station to which the mobile terminal is connected. When each radio base station signals the optimum receiving beamforming characteristics reported from the mobile terminal to other radio base stations, each of the radio base stations mutually coordinating can recognize the optimum receiving beamforming characteristics for the mobile terminals connected to the other radio base stations.

The channel impulse characteristics may be calculated as a channel impulse matrix, and the optimum receiving beamforming characteristics may be expressed as a receiving beamforming vector or a receiving beamforming matrix formed of one or more vectors constituting a unitary matrix obtained by applying singular value decomposition to the channel impulse matrix.

The precoding characteristics may be calculated by using zero-forcing precoding. Alternatively, the precoding characteristics may be calculated by using minimum mean square error (MMSE) precoding.

A radio communication system according to the present invention includes a plurality of mobile terminals and a plurality of radio base stations communicating with the mobile terminals by radio. Each of the mobile terminals includes a channel estimating section that calculates channel impulse characteristics of downlinks from the radio base stations to the mobile terminal. The radio communication system includes a receiving beamforming characteristics estimating section that estimates optimum receiving beamforming characteristics for each of the mobile terminals according to, among the channel impulse characteristics, the channel impulse characteristics of the downlink through which the mobile terminal actually receives a data signal. Each of the radio base stations that share the optimum receiving beamforming characteristics includes a precoding-characteristics calculation section that calculates precoding characteristics for each of the mobile terminals according to the optimum receiving beamforming characteristics such that main beams are directed to mobile terminals to which the radio base station sends data signals and null beams are directed to mobile terminals to which the radio base station does not send data signals.

As described above, the precoding characteristics calculated by the precoding-characteristics calculation section match the optimum receiving beamforming characteristics for the mobile terminals. In CS/CB in downlink CoMP, it is possible to increase the calculation precision of the precoding characteristics for each mobile terminal.

The precoding-characteristics calculation section in each of the radio base stations may calculate the precoding characteristics for each of the mobile terminals by using the optimum receiving beamforming characteristics for transmission-destination mobile terminals to which the radio base station actually sends data signals, the channel impulse characteristics of the downlinks through which the radio base station actually sends the data signals to the transmission-destination mobile terminals, the optimum receiving beamforming characteristics for other mobile terminals to which the radio base station does not actually send data signals, and the channel impulse characteristics of the downlinks to the other mobile terminal.

By calculating the precoding characteristics in this manner, the precoding-characteristics calculation section can have high-precision precoding characteristics.

In an aspect, each of the radio base stations may include the receiving beamforming characteristics estimating section, and the receiving beamforming characteristics estimating section may estimate the optimum receiving beamforming characteristics for transmission-destination mobile terminals to which the radio base station provided with the receiving beamforming characteristics estimating section actually sends data signals, according to the channel impulse characteristics of the downlinks between the transmission-destination mobile terminals and the radio base station, the channel impulse characteristics being reported from the transmission-destination mobile terminals to the radio base station. Each of the radio base stations may include an inter-base-station communication section that signals the optimum receiving beamforming characteristics estimated by the receiving beamforming characteristics estimating section of the radio base station to another radio base station and receives the optimum receiving beamforming characteristics for other mobile terminals sent from another radio base station.

In another aspect, each of the radio base stations may include the receiving beamforming characteristics estimating section, and the receiving beamforming characteristics estimating section may estimate the optimum receiving beamforming characteristics for transmission-destination mobile terminals to which the radio base station provided with the receiving beamforming characteristics estimating section actually sends data signals, according to the channel impulse characteristics of the downlinks between the transmission-destination mobile terminals and the radio base station, and may also estimate the optimum receiving beamforming characteristics for other mobile terminals according to the channel impulse characteristics of the downlinks between the other mobile terminals and another coordinating radio base station.

In another aspect, each of the mobile terminals may include the receiving beamforming characteristics estimating section, and the receiving beamforming characteristics estimating section may estimate the optimum receiving beamforming characteristics for the mobile terminal provided with the receiving beamforming characteristics estimating section according to the channel impulse characteristics of the downlink through which the mobile terminal provided with the receiving beamforming characteristics estimating section actually receives a data signal among the channel impulse characteristics calculated by the channel estimating section of the mobile terminal provided with the receiving beamforming characteristics estimating section. Each of the mobile terminals may include a reporting section that reports the optimum receiving beamforming characteristics to a radio base station, and each of the radio base stations may include an inter-base-station communication section that signals, to another radio base station, the optimum receiving beamforming characteristics reported from the mobile terminal.

In one aspect of the present invention, a radio base station communicates with a plurality of mobile terminals by radio. The radio base station includes a receiving beamforming characteristics estimating section that estimates optimum receiving beamforming characteristics for transmission-destination mobile terminals to which the radio base station actually sends data signals, according to channel impulse characteristics of downlinks between the radio base station and the transmission-destination mobile terminals, the channel impulse characteristics being reported from the transmission-destination mobile terminals; an inter-base-station communication section that signals the optimum receiving beamforming characteristics estimated by the receiving beamforming characteristics estimating section to another radio base station and receives optimum receiving beamforming characteristics for other mobile terminals from another radio base station; and a precoding-characteristics calculation section that calculates precoding characteristics for each of the mobile terminals according to the optimum receiving beamforming characteristics for the transmission-destination mobile terminal estimated by the receiving beamforming characteristics estimating section and the optimum receiving beamforming characteristics for the other mobile terminals received from the other radio base station such that main beams are directed to the transmission-destination mobile terminals and null beams are directed to mobile terminals to which the radio base station does not send data signals.

In another aspect of the present invention, a radio base station communicates with a plurality of mobile terminals by radio. The radio base station includes a receiving beamforming characteristics estimating section that estimates optimum receiving beamforming characteristics for transmission-destination mobile terminals to which the radio base station actually sends data signals, according to channel impulse characteristics of downlinks between the radio base station and the transmission-destination mobile terminals and estimates optimum receiving beamforming characteristics for other mobile terminals according to channel impulse characteristics of downlinks between another radio base station and the other mobile terminals; and a precoding-characteristics calculation section that calculates precoding characteristics for each of the mobile terminals according to the optimum receiving beamforming characteristics for transmission-destination mobile terminals estimated by the receiving beamforming characteristics estimating section and the optimum receiving beamforming characteristics for the other mobile terminals such that main beams are directed to the transmission-destination mobile terminals and null beams are directed to mobile terminals to which the radio base station does not send data signals.

In still another aspect of the present invention, a mobile terminal is capable of communicating with a plurality of radio base stations by radio. The mobile terminal includes a channel estimating section that calculates channel impulse characteristics of downlinks from the radio base stations to the mobile terminal; a receiving beamforming characteristics estimating section that estimates optimum receiving beamforming characteristics for the mobile terminal according to channel impulse characteristics of a downlink through which the mobile terminal actually receives data signals, among the channel impulse characteristics calculated by the channel estimating section; and a reporting section that reports the optimum receiving beamforming characteristics to a radio base station.

Brief Description of the Drawings

Fig. 1 is a block diagram of a radio communication system according to all embodiments of the present invention.
Fig. 2 is a block diagram of a radio base station according to a first embodiment of the present invention.
Fig. 3 is a block diagram of a mobile terminal according to the first embodiment of the present invention.
Fig. 4 is a view explaining a radio communication control method according to all the embodiments of the present invention.
Fig. 5 is an information flow diagram showing an outline of a radio communication control method according to the first embodiment of the present invention.
Fig. 6 is an information flow diagram showing an outline of a radio communication control method according to a second embodiment of the present invention.
Fig. 7 is a block diagram of a radio base station according to a third embodiment of the present invention.
Fig. 8 is a block diagram of a mobile terminal according to the third embodiment of the present invention.
Fig. 9 is an information flow diagram showing an outline of a radio communication control method according to the third embodiment of the present invention.

Description of Embodiments

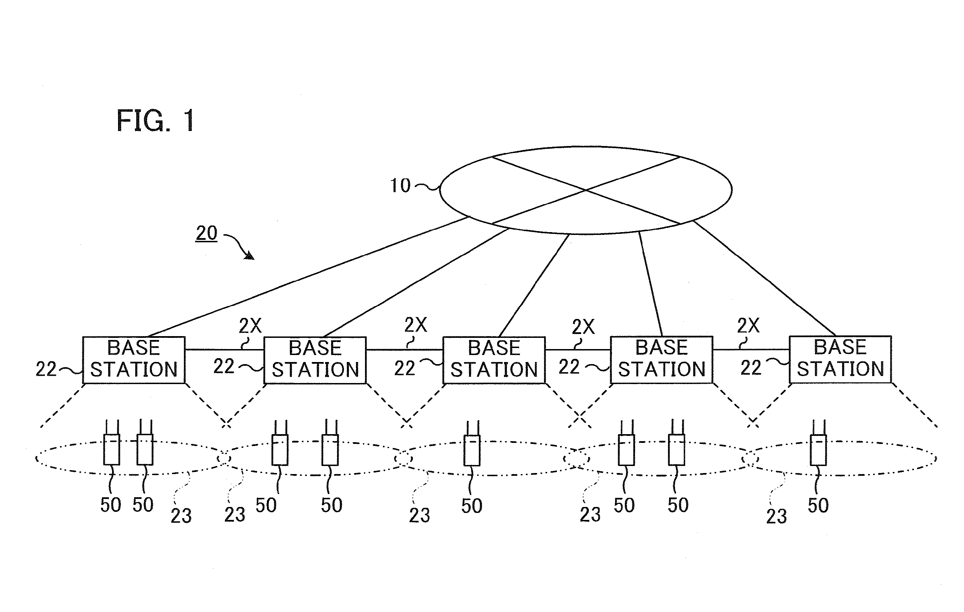

Various embodiments of the present invention will be described below with reference to the drawings.
As shown in Fig. 1, a radio communication system according all embodiments of the present invention includes a core network 10 and a radio access network 20. The radio access network 20 includes a plurality of radio base stations 22 and X2 interfaces 2X connecting the radio base stations. The core network 10 is connected to the plurality of radio base stations 22. Each of the radio base stations 22 communicates with a mobile terminal 50 located in a cell 23 of the radio base station 22. The mobile terminal 50 is, for example, user equipment (UE) used in Long Term Evolution (LTE) in mobile telephony (universal mobile telecommunications system, UMTS).
Each of the radio base stations 22 may be a node B (NB) in UMTS. Alternatively, each of the radio base stations 22 may be an access point in a radio local area network (LAN) or in Worldwide Interoperability for Microwave Access (WiMAX).

First embodiment

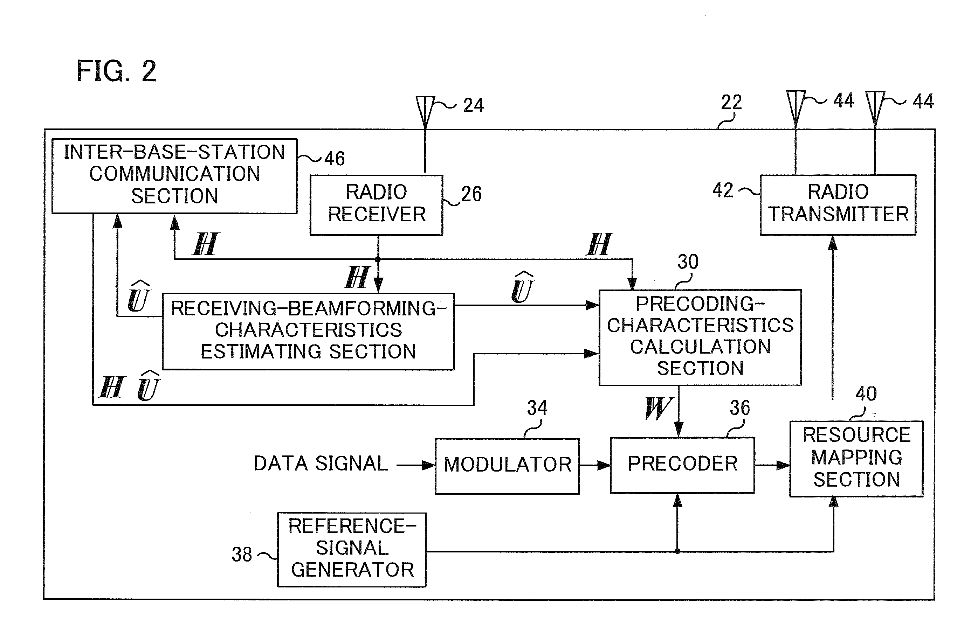

Fig. 2 shows a radio base station 22 according to a first embodiment of the present invention. As shown in Fig. 2, the radio base station 22 includes at least one receiving antenna 24, a radio receiver 26, a receiving-beamforming-characteristics estimating section 28, a precoding-characteristics calculation section 30, a modulator 34, a precoder 36, a reference-signal generator 38, a resource mapping section 40, a radio transmitter 42, at least two transmission antennas 44, and an inter-base-station communication section 46.
Among these sections in the radio base station 22, the receiving-beamforming-characteristics estimating section 28, the precoding-characteristics calculation section 30, and the reference-signal generator 38 are functional blocks implemented when a central processing unit (CPU), not shown, of the radio base station 22 executes a computer program and realizes functions according to the computer program.
The radio base station 22 includes the at least one receiving antenna 24 in order to perform radio reception from a mobile terminal 50. The radio receiver 26 is a receiving circuit for converting radio waves received from the receiving antenna 24 into an electrical signal.
The radio base station 22 includes the at least two transmission antennas 44 in order to perform radio transmission to a mobile terminal 50. The transmission antennas 44 form an adaptive array antenna, of which the directions of transmission beams can be controlled. The radio transmitter 42 is a transmission circuit for converting an electrical signal to radio waves to be sent from the transmission antennas 44.
The inter-base-station communication section 46 is a communication interface for the radio base station 22 having the inter-base-station communication section 46 to communicate with another radio base station 22.
The receiving-beamforming-characteristics estimating section 28 receives a signal indicating a channel impulse matrix (denoted as a matrix H (bold) in the figure) of the downlink for a mobile terminal 50 connected to the radio base station 22 among electrical signals sent from the radio receiver 26, the channel impulse matrix being reported by the mobile terminal 50. "Connection" means a state in which synchronization is established between the radio base station 22 and the mobile terminal 50; the radio base station 22 can actually send a data signal to the mobile terminal 50; and the mobile terminal 50 can actually send a data signal to the radio base station 22.

The mobile terminal 50 reports at least one channel impulse matrix of at least one downlink for the mobile terminal 50 to the radio base station 22 to which the mobile terminal 50 is connected. The mobile terminal 50 not only calculates a channel impulse matrix of the downlink from the radio base station 22 to which the mobile terminal 50 is connected and reports the matrix to the radio base station 22, but also, so long as it receives a reference signal, to be described later, calculates channel impulse matrixes of the downlinks from other radio base stations 22 to which the mobile terminal 50 is not connected and reports the matrixes to the radio base station 22 to which the mobile terminal 50 is connected.

According to a channel impulse matrix of the downlink between the radio base station 22 provided with the receiving-beamforming-characteristics estimating section 28 and a mobile terminal 50 to which the radio base station is to be connected (in other words, a mobile terminal 50 that is located in the cell of the radio base station 22 and that can be an actual data-signal transmission destination in downlink communication), the receiving-beamforming-characteristics estimating section 28 estimates an optimum receiving beamforming estimation matrix (denoted as a matrix U (bold) with a hat in the figure) for the mobile terminal 50 that can be a transmission destination. Therefore, even if a single mobile terminal 50 reports channel impulse matrixes related to a plurality of radio base stations 22, only the channel impulse matrix for the downlink through which a data signal is to be actually sent to the mobile terminal 50 is used to estimate the optimum receiving beamforming estimation matrix for the mobile terminal 50. The optimum receiving beamforming estimation matrix calculated by the receiving-beamforming-characteristics estimating section 28 is used by the radio base station 22 provided with the receiving-beamforming-characteristics estimating section 28 and another radio base station 22 that coordinates with that radio base station 22, but the mobile terminal 50 does not use the optimum receiving beamforming estimation matrix to perform receiving beamforming. The receiving-beamforming-characteristics estimating section 28 supplies the optimum receiving beamforming estimation matrix generated by itself to the precoding-characteristics calculation section 30.

When the receiving-beamforming-characteristics estimating section 28 generates the optimum receiving beamforming estimation matrix, the inter-base-station communication section 46 sends the optimum receiving beamforming estimation matrix to another radio base station 22 that coordinates with the radio base station 22. The inter-base-station communication section 46 also receives, from one or more radio base stations 22 with which the radio base station 22 coordinates, the optimum receiving beamforming estimation matrixes generated by the one or more radio base stations 22 (for mobile terminals 50 that connect to the one or more radio base stations 22) and supplies the optimum receiving beamforming estimation matrixes to the precoding-characteristics calculation section 30.

The downlink channel impulse matrix received by the radio receiver 26 is supplied also to the precoding-characteristics calculation section 30. Then, a signal indicating the downlink channel impulse matrix received by the radio receiver 26 is sent by the inter-base-station communication section 46 to the one or more other radio base stations 22 with which the radio base station 22 coordinates. The inter-base-station communication section 46 also receives, from the one or more other radio base stations 22 with which the radio base station 22 coordinates, signals indicating the channel impulse matrixes reported from mobile terminals 50 that connect to the one or more radio base stations 22 to the one or more radio base stations 22 and supplies those channel impulse matrixes to the precoding-characteristics calculation section 30.

"Coordinates with" in "another radio base station 22 with which the radio base station 22 coordinates" means CS/CB in CoMP. Each radio base station 22 is aware of in advance another radio base station 22 with which that radio base station 22 should coordinate. For example, a first radio base station knows in advance a second radio base station and a third radio base station as two other radio base stations with which the first radio base station should coordinate, and the second radio base station knows in advance the first radio base station as another radio base station with which the second radio base station should coordinate.

According to the optimum receiving beamforming estimation matrix estimated by the receiving-beamforming-characteristics estimating section 28 for each mobile terminal 50 serving as the data-signal transmission destination and the optimum receiving beamforming estimation matrixes for the other mobile terminals 50 reported from the other radio base stations 22, the precoding-characteristics calculation section 30 calculates a precoding matrix for each mobile terminal 50 (that is, each of mobile terminals that are transmission destinations in the cell of the radio base station 22 and the other mobile terminals in the cells of the other radio base stations 22) such that the transmission antennas 44 direct the main beams to the mobile terminals 50 that are the transmission destinations and direct null beams to the other mobile terminals in the cells of the other radio base stations 22. The precoding matrix (denoted as a matrix W (bold) in the figure) is a set of weighting coefficients (transmission weights) generated in order to direct the main beams of the transmission antennas 44 to the transmission-destination mobile terminals 50. As described above, the precoding-characteristics calculation section 30 uses a plurality of optimum receiving beamforming estimation matrixes in order to calculate a single precoding matrix for a single mobile terminal 50. To calculate the precoding matrix, the downlink channel impulse matrixes for the mobile terminals 50 for which the data signals are destined received by the radio receiver 26, and the downlink channel impulse matrixes for the other mobile terminals 50 received by the inter-base-station communication section 46 are also used.

The data signals are supplied to the modulator 34. The data signal is destined for a mobile terminal 50 located in the cell 23 of the radio base station 22 and connected to that radio base station 22. The data signal indicates voice, a moving image, a still image, or text. The data signal may be generated by a data-signal generator, not shown, in the radio base station 22, or may be a signal sent to the radio base station 22 from another radio base station 22 or from the core network 10.

The modulator 34 encodes the data signal and further applies multi-level modulation. The multi-level modulation may be quadrature phase shift keying (QPSK), quadrature amplitude modulation (QAM), another phase shift keying (PSK), or another amplitude modulation (AM). The encoding may be turbo encoding, convolutional encoding, low density parity check (LDPC) encoding, or any other encoding.

The reference-signal generator 38 generates a reference signal in order that the mobile terminal 50 can perform downlink channel estimation and synchronous detection. The reference-signal generator 38 generates a plurality of sequences (each of the sequences includes a reference signal disposed at predetermined time intervals) to be respectively transmitted by the plurality of transmission antennas 44. In each sequence, the reference signal is sent in the downlink from the transmission antennas 44 of the radio base station 22 periodically (every 1 ms, for example).

The precoder 36 precodes the modulated data signal supplied from the modulator 34 and the reference signal supplied from the reference-signal generator 38 according to the precoding matrix calculated by the precoding-characteristics calculation section 30 and supplies the precoded signal to the resource mapping section 40.

The resource mapping section 40 performs resource mapping in order to send downlink signals with orthogonal frequency division multiple access (OFDMA). The signals to which resource mapping have been applied are supplied to the radio transmitter 42 and are sent by radio by the transmission antennas 44.

The reference-signal generator 38 sends the reference-signal sequences directly to the resource mapping section 40 in order that even mobile terminals 50 that are not the data-signal transmission destinations can receive the reference signal. In that case, the reference signal is not precoded, is subjected to resource mapping in the resource mapping section 40, and is supplied to the radio transmitter 42 that sends the reference signal. Each mobile terminal 50 performs downlink channel estimation according to the reference signal when the mobile terminal 50 is located in a place where the reference signal can be received even if the mobile terminal 50 is not a data-signal transmission destination. Each mobile terminal 50 can identify the radio base station that is the transmission source of the received reference signal and also the transmission antenna 44 that has sent the reference signal, and can perform channel estimation for a plurality of paths from the plurality of transmission antennas 44.

The reference-signal generator 38 also supplies the reference-signal sequences to the precoder 36. When a data signal to be transmitted exists, the reference signal supplied to the precoder 36 is precoded together with the data signal; the precoded signal is subjected to resource mapping in the resource mapping section 40; and the signal is supplied to the radio transmitter 42 and transmitted. Each mobile terminal 50 serving as the data-signal transmission destination distinguishes the reference signal from the data signal and performs downlink channel estimation according to the reference signal. Each mobile terminal 50 can identify the radio base station 22 that is the transmission source of the received reference signal and also the transmission antenna 44 that has sent the reference signal, and can perform channel estimation for a plurality of paths from the plurality of transmission antennas 44.

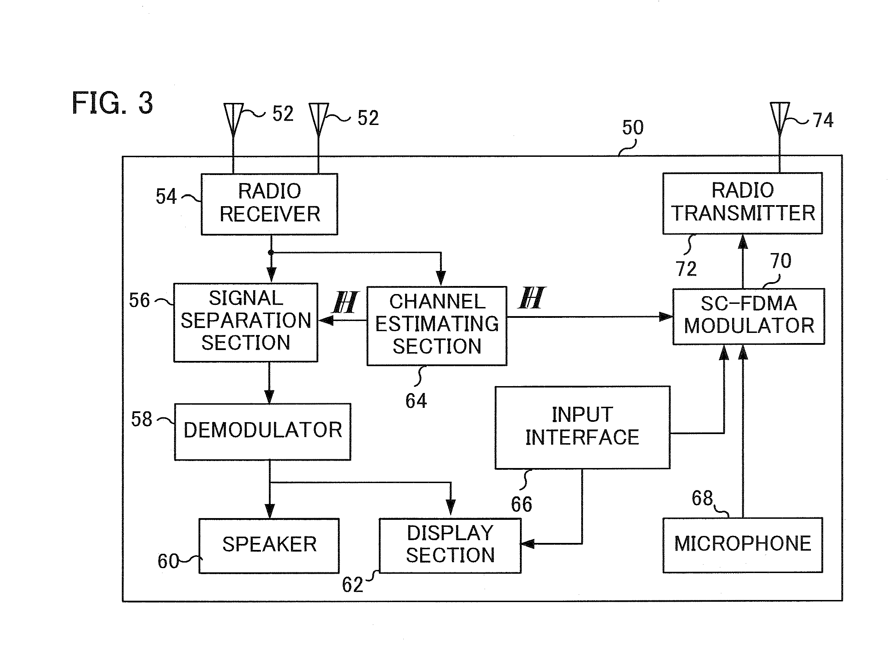

Fig. 3 is a block diagram of the mobile terminal according to the first embodiment of the present invention. The mobile terminal 50 includes at least two receiving antennas 52, a radio receiver 54, a signal separation section 56, a demodulator 58, a speaker 60, a display section 62, a channel estimating section 64, an input interface 66, a microphone 68, a single-carrier frequency-division multiple access (SC-FDMA) modulator 70, a radio transmitter 72, and at least one transmission antenna 74.

Among these sections in the mobile terminal 50, the signal separation section 56, the demodulator 58, the channel estimating section 64, and the SC-FDMA modulator 70 are functional blocks implemented when a CPU, not shown, of the mobile terminal 50 executes a computer program and realizes functions according to the computer program.

The mobile terminal 50 includes the at least two receiving antennas 52 in order to perform radio reception from a radio base station 22. The receiving antennas 52 form an adaptive array antenna, of which the output signal derived from a radio wave coming from a specific direction can be separated by using a signal separation technology. Since each radio base station 22 has at least two transmission antennas 44 and each mobile terminal 50 has at least two receiving antennas 52, downlink MIMO is possible. The radio receiver 54 is a receiving circuit for converting radio waves received from the receiving antennas 52 into an electrical signal.

The mobile terminal 50 includes the at least one transmission antenna 74 in order to perform radio transmission to a radio base station 22. The radio transmitter 72 is a transmission circuit for converting an electrical signal to radio waves to be sent from the transmission antenna 74.

The input interface 66 is, for example, a key pad, and is used by the user to input various instructions to and make selections on the mobile terminal 50. The display section 62 displays the image in response to an input at the input interface 66. The display section 62 also displays a moving image, a still image, or text according to a reception signal received at the radio receiver 54 through the downlink communication from a radio base station 22. The speaker 60 outputs a voice according to a reception signal received at the radio receiver 54 in downlink voice communication. The microphone 68 converts the voice of the user of the mobile terminal 50 into an electrical signal in uplink voice communication.

The channel estimating section 64 performs channel estimation and calculates downlink channel impulse characteristics, that is, a channel impulse matrix (denoted as a matrix H (bold) in the figure), from the reference signal in the electrical signals sent from the radio receiver 54. As described above, the channel estimating section 64 not only calculates a channel impulse matrix of the downlink from the radio base station 22 to which the mobile terminal 50 is connected, but also, so long as it receives the reference signal, calculates a channel impulse matrix of the downlink from a radio base station 22 to which the mobile terminal 50 is not connected. Each channel impulse matrix includes, as elements, the transfer coefficients of the downlink paths from the plurality of transmission antennas 44 of the radio base station 22 to the plurality of receiving antennas 22 of the mobile terminal 50. When the radio base station 22 has two transmission antennas 44 and the mobile terminal 50 has two receiving antennas 52, for example, since four paths exist, the channel impulse matrix has two rows and two columns, including the transfer coefficients of the four paths as four elements.

The signal separation section 56 separates the signal supplied from the radio receiver 54 into reception signals for the respective receiving antennas 52 with a signal separation technology by using the channel impulse matrix calculated by the channel estimating section 64. Known signal separation technologies include, for example, a method in which the inverse matrix of the channel impulse matrix is multiplied, a zero-forcing signal separation method, and a minimum mean square error (MMSE) signal separation method. The signal separation section 56 may use either of these signal separation technologies. Signal separation is receiving beamforming, but the technology for generating an optimum receiving beamforming estimation matrix (denoted as a matrix U (bold) with a hat in Fig. 2), to be described later, is different from the receiving beamforming technology executed in the signal separation section 56.

The demodulator 58 demodulates and decodes the signals separated by the signal separation section 56 to obtain data signals for the respective receiving antennas 52. In the figure, the signal separation section 56 and the demodulator 58 are provided separately, but the mobile terminal 50 may be provided with a section for maximum likelihood detection (MLD), which is for both demodulation and signal separation, instead of the signal separation section 56 and the demodulator 58.

According to the data signals output from the demodulator 58, the speaker 60 outputs sound or the display unit displays an image.

A signal indicating the channel impulse matrix calculated by the channel estimating section 64 is supplied to the SC-FDMA modulator 70. A data signal generated according to a user input to the input interface 66 and a data signal generated by the microphone 68 are also supplied to the SC-FDMA modulator 70. The SC-FDMA modulator 70 performs various processes required to send an uplink signal by SC-FDMA and supplies the processed signal to the radio transmitter 72. In this manner, the data signals and the signal indicating the channel impulse matrix are sent by radio toward the radio base station 22.

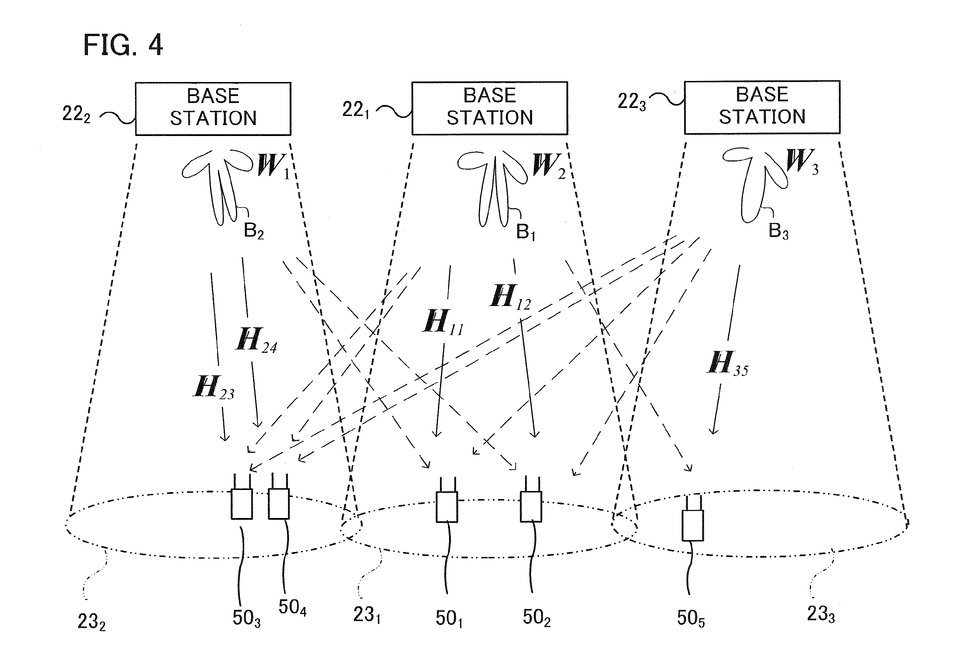

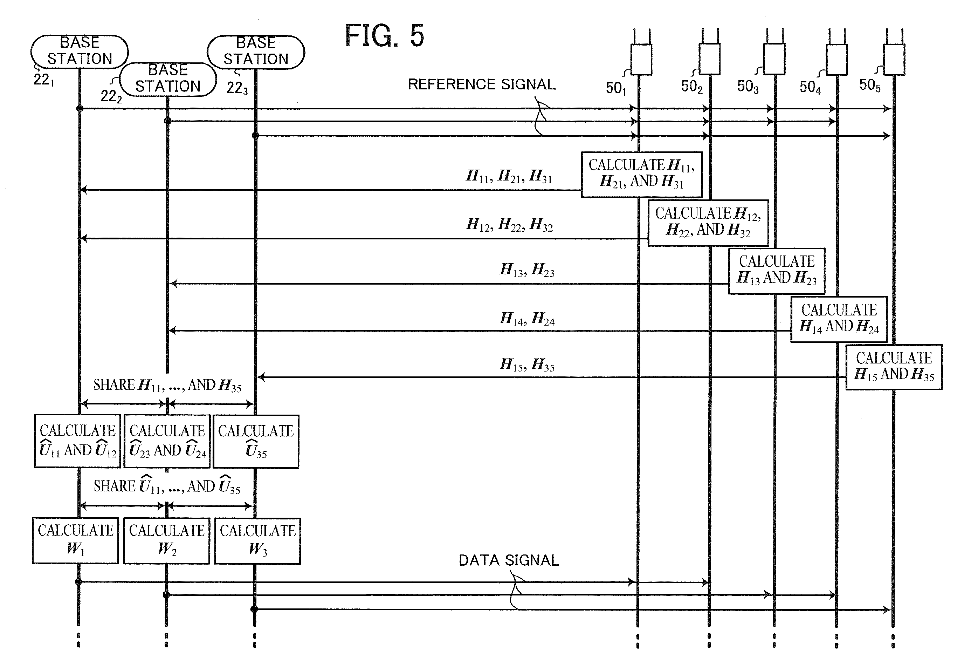

A radio communication control method according to the first embodiment of the present invention will be specifically described with reference to Fig. 4 and Fig. 5. To simplify the description, Fig. 4 and Fig. 5 show only three radio base stations 22 (a first radio base station $22_1$, a second radio base station $22_2$, and a third radio base station $22_3$) and five mobile terminals 50 (a first mobile terminal $50_1$, a second mobile terminal $50_2$, a third mobile terminal $50_3$, a fourth mobile terminal $50_4$, and a fifth mobile terminal $50_5$).

The first mobile terminal $50_1$ and the second mobile terminal $50_2$ are located in the cell $23_1$ of the first radio base station $22_1$ and are connected to the first radio base station $22_1$. The first radio base station $22_1$ actually sends downlink data signals to the first mobile terminal $50_1$ and the second mobile terminal $50_2$. The third mobile terminal $50_3$ and the fourth mobile terminal $50_4$ are located in the cell $23_2$ of the second radio base station $22_2$ and are connected to the second radio base station $22_2$. The second radio base station $22_2$ actually sends downlink data signals to the third mobile terminal $50_3$ and the fourth mobile terminal $50_4$. The fifth mobile terminal $50_5$ is located in the cell $23_3$ of the third radio base station $22_3$ and is connected to the third radio base station $22_3$. The third radio base station $22_3$ actually sends a downlink data signal to the fifth mobile terminal $50_5$.

For the first radio base station $22_1$, the second radio base station $22_2$ and the third radio base station $22_3$ are other base stations that should coordinate with the first radio base station $22_1$. In other words, for the first radio base station $22_1$, the second radio base station $22_2$ and the third radio base station $22_3$ belong to the same coordination group as the first radio base station $22_1$. For the second radio base station $22_2$, the first radio base station $22_1$ is another base station that should coordinate with the second radio base station $22_2$, but the third radio base station $22_3$ is not. For the second radio base station $22_2$, only the first radio base station $22_1$ belongs to the same coordination group as the second radio base station $22_2$. For the third radio base station $22_3$, the first radio base station $22_1$ is another base station that should coordinate with the third radio base station $22_3$, but the second radio base station $22_2$ is not. For the third radio base station $22_3$, only the first radio base station $22_1$ belongs to the same coordination group as the third radio base station $22_3$. Each radio base station 22 recognizes another radio base station that should coordinate with (the coordination group of) that radio base station 22.

Each mobile terminal 50 shown in the figure can receive a data signal and a reference signal from the connected radio base station 22. Each mobile terminal 50 can receive only a reference signal from the radio base stations 22 that the mobile terminal is not connected to. According to the reference signal sent from each radio base station 22, the channel estimating section 64 of each mobile terminal 50 individually calculates the downlink channel impulse matrixes $H_{ij}$ where the subscript i indicates the ordinal number of a radio base station 22 and the subscript j indicates the ordinal number of a mobile terminal 50.

For example, the first mobile terminal $50_1$ calculates a channel impulse matrix $H_{11}$ according to the reference signal sent from the first radio base station $22_1$, and the third mobile terminal $50_3$ calculates a channel impulse matrix $H_{23}$ according to the reference signal sent from the second radio base station $22_2$. As described above, each channel impulse matrix has the number of elements corresponding to the number of transmission antennas 44 of the radio base station 22 and the number of receiving antennas 52 of the mobile terminal 50.

Each mobile terminal 50 can discriminate the reference signals sent from the radio base stations 22 to which the mobile terminal 50 is not connected, and also calculates, from the reference signals, channel impulse matrixes for the downlinks from the radio base stations 22 that do not send data signals to the mobile terminal 50. For example, the first mobile terminal $50_1$ calculates a channel impulse matrix $H_{21}$ with respect to the second radio base station $22_2$, and a channel impulse matrix $H_{31}$ with respect to the third radio base station $22_3$.

Each mobile terminal 50 sends signals indicating the plurality of channel impulse matrixes calculated by the mobile terminal 50 to the radio base station 22 to which the mobile terminal 50 is connected. For example, the first mobile terminal $50_1$ reports the channel impulse matrixes $H_{11}$, $H_{21}$, and $H_{31}$ to the first radio base station $22_1$.

Coordinating radio base stations 22 mutually signal the channel impulse matrixes reported from mobile terminals 50 with the inter-base-station communication sections 46. More specifically, the inter-base-station communication section 46 signals the channel impulse matrixes received by the radio base station 22 provided with the inter-base-station communication section 46 to another radio base station 22, and receives the channel impulse matrixes for other mobile terminals 50 from the other radio base station 22. In this manner, the channel impulse matrixes calculated in the mobile terminals 50 are shared by the coordinating radio base stations 22.

Under the assumption that each mobile terminal 50 performs optimum receiving beamforming in order to receive a downlink data signal from a radio base station 22 that actually sends the data signal to the mobile terminal 50, the receiving-beamforming-characteristics estimating section 28 of each radio base station 22 calculates (i.e., estimates) an optimum receiving beamforming estimation matrix $\hat{U}_{ij}$ for the mobile terminal 50.

More specifically, according to the channel impulse matrix of a downlink through which the mobile terminal 50 for which the data signal is destined actually receives the data signal among the plurality of channel impulse matrixes of the downlinks reported from the mobile terminal 50, the receiving-beamforming-characteristics estimating section 28 of each radio base station 22 estimates an optimum receiving beamforming matrix for the mobile terminal 50. In other words, the receiving-beamforming-characteristics estimating section 28 of each radio base station 22 estimates an optimum receiving beamforming matrix for a mobile terminal 50 connected to the radio base station 22 according to the channel impulse matrix for the downlink from the radio base station 22 to the mobile terminal 50.

For example, among the above-described plurality of channel impulse matrixes reported from the first mobile terminal $50_1$, according to the channel impulse matrix $H_{11}$ of the downlink between the first radio base station $22_1$ and the first mobile terminal $50_1$, to be used to actually send a data signal, under the assumption that the first mobile terminal $50_1$ performs optimum receiving beamforming in order to receive the downlink data signal from the first radio base station $22_1$, the first radio base station $22_1$ calculates an optimum receiving beamforming estimation matrix $\hat{U}_{11}$ for the first mobile terminal $50_1$.

As described above, the first radio base station $22_1$ receives, from the first mobile terminal $50_1$, the channel impulse matrixes $H_{21}$ and $H_{31}$, but these channel impulse matrixes are not used to calculate an optimum receiving beamforming estimation matrix in any of the radio base stations 22.

Among the plurality of channel impulse matrixes reported from the second mobile terminal $50_2$, according to the channel impulse matrix $H_{12}$ of the downlink between the first radio base station $22_1$ and the second mobile terminal $50_2$, to be used to actually send a data signal, under the assumption that the second mobile terminal $50_2$ performs optimum receiving beamforming in order to receive the downlink data signal from the first radio base station $22_1$, the first radio base station $22_1$ calculates an optimum receiving beamforming estimation matrix $\hat{U}_{12}$ for the second mobile terminal $50_2$.

In the same way, according to the channel impulse matrix $H_{23}$ among the plurality of channel impulse matrixes reported from the third mobile terminal $50_3$, the second radio base station $22_2$ calculates an optimum receiving beamforming estimation matrix $\hat{U}_{23}$ for the third mobile terminal $50_3$. According to the channel impulse matrix $H_{24}$ among the

plurality of channel impulse matrixes reported from the fourth mobile terminal $50_4$, the second radio base station $22_2$ calculates an optimum receiving beamforming estimation matrix $\hat{U}_{24}$ for the fourth mobile terminal $50_4$. According to the channel impulse matrix $H_{35}$ among the plurality of channel impulse matrixes reported from the fifth mobile terminal $50_5$, the third radio base station $22_3$ calculates an optimum receiving beamforming estimation matrix $\hat{U}_{35}$ for the fifth mobile terminal $50_5$.

As described above, each radio base station 22 estimates optimum receiving beamforming characteristics for each mobile terminal 50 that is a transmission destination to which the radio base station 22 actually sends a data signal, according to the channel impulse matrix of the downlink between the radio base station 22 and the transmission destination mobile terminal 50, reported from the transmission destination mobile terminal 50. In other words, each radio base station 22 estimates optimum receiving beamforming characteristics only for each mobile terminal 50 to which the radio base station 22 is connected.

A specific calculation method for the optimum receiving beamforming estimation matrix is shown below. The matrix is obtained by singular value decomposition (SVD). When singular value decomposition is applied to a channel impulse matrix, the following three matrixes are obtained.

$$\boldsymbol{H}_{ij} = \boldsymbol{U}_{ij}\,\boldsymbol{\varLambda}_{ij}\,\boldsymbol{V}_{ij}{}^{\mathrm{H}}$$

Here, $U_{ij}$ is a unitary matrix. $\varLambda_{ij}$ is a canonical form obtained in singular value decomposition. In the canonical form, the elements other than the diagonal elements are zero and the diagonal elements are not negative. The diagonal elements are singular values. $V_{ij}$ is a virtual unitary matrix indicating the transmission beam from the radio base station 22. The superscript H indicates complex conjugate transposition, that is, a Hermitian transpose.

Therefore, three matrixes are obtained at the same time from a known single channel impulse matrix. Among the group of vectors constituting the unitary matrix $U_{ij}$ obtained in this way, one or more vectors corresponding to one or more larger singular values in the canonical form, the number of vectors being smaller than the number of receiving antennas 52 in the mobile terminal 50, are selected, so that an optimum receiving beamforming estimation matrix $\hat{U}_{ij}$ formed of the one or more vectors is obtained. More specifically, when one vector corresponding only to the maximum singular value is selected, an optimum receiving beamforming estimation matrix having only one column (which can be regarded as an optimum receiving beamforming estimation vector) is obtained; and when two or more vectors corresponding to two or more larger singular values are selected, an optimum receiving beamforming estimation matrix having two or more columns is obtained.

Even when the channel impulse matrix has multiple rows and multiple columns due to the number of transmission antennas 44 of the radio base station 22 and the number of receiving antennas 52 of the mobile terminal 50, the number of columns in the optimum receiving beamforming estimation matrix obtained from the above-described singular value decomposition is reduced from the number of actual receiving antennas 52. In other words, it is assumed that the number of receiving antennas 52 of the mobile terminal 50 is equal to the number of columns in the optimum receiving beamforming estimation matrix (it is assumed that the number of receiving antennas 52 is 1 when the number of columns in the optimum receiving beamforming estimation matrix is 1). The optimum receiving beamforming estimation matrix is used to calculate the precoding matrix. When an optimum receiving beamforming estimation matrix having multiple rows and multiple columns is used to calculate a precoding matrix under the assumption that the mobile terminal 50 has a plurality of receiving antennas 52, the precoding matrix has a huge number of elements (a huge number of transmission weights), and the radio base station 22 consumes much electric power for actual precoding. When the number of columns of the optimum receiving beamforming estimation matrix is reduced from the number of receiving antennas, the consumption power of the radio base station 22 can be reduced. The number of singular values selected from the canonical form, thus, the number of columns of the optimum receiving beamforming estimation matrix can be determined by taking into consideration the tradeoff between the reduction in consumed power and the precision of precoding characteristics.

Coordinating radio base stations 22 mutually signal the optimum receiving beamforming estimation matrixes calculated in the radio base stations 22 with the inter-base-station communication sections 46. More specifically, the inter-base-station communication section 46 signals the optimum receiving beamforming estimation matrixes estimated in the radio base station 22 provided with the inter-base-station communication section 46 to other radio base stations 22, and receives the optimum receiving beamforming estimation matrixes for other mobile terminals 50 from the other radio base stations 22. Since each radio base station 22 signals the optimum receiving beamforming characteristics estimated by the radio base station 22 to other radio base stations 22, these radio base stations 22 mutually coordinating can have the optimum receiving beamforming characteristics for mobile terminals 50 connected to the other radio base stations 22 as shared knowledge.

Next, the precoding-characteristics calculation section 30 of each radio base station 22 calculates precoding characteristics for each transmission-destination mobile terminal 50 such that the main beams are directed to the transmission-destination mobile terminals 50 according to the optimum receiving beamforming characteristics for the transmission-destination mobile terminals 50, estimated by the receiving beamforming characteristics estimating section 28 and the optimum receiving beamforming characteristics for other mobile terminals 50 signaled from other radio base stations 22. The precoding characteristics for each mobile terminal 50 are calculated according to the optimum receiving beamforming characteristics for the mobile terminal 50, the channel impulse characteristics of the downlink to the mobile terminal 50 from a specific radio base station 22 that actually sends a data signal to the mobile terminal 50, the optimum receiving beamforming characteristics for other mobile terminals 50, and the channel impulse characteristics of the downlinks from specific radio base stations 22 to the other mobile terminals 50.

A calculation method for a precoding matrix executed by the first radio base station $22_1$ will be specifically described. The first radio base station $22_1$ calculates an effective channel matrix $\hat{G}_{lj}$ for the downlink from the first radio base station $22_1$ according to the following general expression:

$$\widehat{G}_{1j} = \widehat{U}_{ij}^{\mathrm{H}} H_{1j}$$

When there are five mobile terminals 50 (the first mobile terminal $50_1$ to the fifth mobile terminal $50_5$) as shown in Fig. 4, there are five effective channel matrixes $\hat{G}_{11}$, $\hat{G}_{12}$, $\hat{G}_{13}$, $\hat{G}_{14}$, and $\hat{G}_{15}$ between the first radio base station $22_1$ and these mobile terminals 50. $\hat{G}_{11}$ is the effective channel matrix for the downlink from the first radio base station $22_1$ to the first mobile terminals $50_1$. $\hat{G}_{12}$ is the effective channel matrix for the downlink from the first radio base station $22_1$ to the second mobile terminals $50_2$. $\hat{G}_{13}$ is the effective channel matrix for the downlink from the first radio base station $22_1$ to the third mobile terminals $50_3$. $\hat{G}_{14}$ is the effective channel matrix for the downlink from the first radio base station $22_1$ to the fourth mobile terminals $50_4$. $\hat{G}_{15}$ is the effective channel matrix for the downlink from the first radio base station $22_1$ to the fifth mobile terminals $50_5$.

The five effective channel matrixes are calculated in the following way:

$$\widehat{G}_{11} = \widehat{U}_{11}^{\mathrm{H}} H_{11}$$

$$\widehat{G}_{12} = \widehat{U}_{12}^{\mathrm{H}} H_{12}$$

$$\widehat{G}_{13} = \widehat{U}_{23}^{\mathrm{H}} H_{13}$$

$$\widehat{G}_{14} = \widehat{U}_{24}^{\mathrm{H}} H_{14}$$

$$\widehat{G}_{15} = \widehat{U}_{35}^{\mathrm{H}} H_{15}$$

From these five effective channel matrixes, a virtual channel matrix $\hat{G}_1$ for the downlink transmission from the first radio base station $22_1$ is obtained in the following way:

$$\widehat{G}_1 = \begin{bmatrix} \widehat{G}_{11} \\ \widehat{G}_{12} \\ \widehat{G}_{13} \\ \widehat{G}_{14} \\ \widehat{G}_{15} \end{bmatrix}$$

The subscript 1 in the virtual channel matrix is the ordinal number of the radio base station 22, which means the first radio base station $22_1$.

According to this virtual channel matrix, the precoding-characteristics calculation section 30 of the first radio base station $22_1$ calculates the precoding matrix $W_1$ according to the following expression. In other words, the precoding-characteristics calculation section 30 calculates the precoding matrix by using the zero-forcing precoding:

$$W_1 = \widehat{G}_1^H \left( \widehat{G}_1 \widehat{G}_1^H \right)^{-1} = \left[ W_{11}, W_{12}, W_{13}, W_{14}, W_{15} \right]$$

The subscript 1 in the precoding matrix is the ordinal number of the radio base station 22, which means the first radio base station $22_1$.

In a modification, the precoding-characteristics calculation section 30 of the first radio base station $22_1$ may calculate the precoding matrix according to the following expression:

$$W_1 = \widehat{G}_1^H \left( \widehat{G}_1 \widehat{G}_1^H + Z_1 \right)^{-1} = \left[ W_{11}, W_{12}, W_{13}, W_{14}, W_{15} \right]$$

Here, $Z_1$ means a noise-and-interference power matrix for the downlink from the first radio base station $22_1$ (the subscript 1 is the ordinal number of the radio base station 22, which means the first radio base station $22_1$) and can be expressed in the following way:

$$Z_1 = \begin{bmatrix} I_1 + N_1 & 0 & 0 & 0 & 0 \\ 0 & I_2 + N_2 & 0 & 0 & 0 \\ 0 & 0 & I_3 + N_3 & 0 & 0 \\ 0 & 0 & 0 & I_4 + N_4 & 0 \\ 0 & 0 & 0 & 0 & I_5 + N_5 \end{bmatrix}$$

In other words, in this modification, the precoding-characteristics calculation section 30 calculates the precoding matrix by using the minimum mean square error (MMSE) precoding.

I indicates the interference power measured at the mobile terminal 50, N indicates the noise power measured at the mobile terminal 50, and the subscript numeral indicates the ordinal number of the mobile terminal 50. For example, $I_3$ means the interference power measured at the third mobile terminal $50_3$. When each mobile terminal 50 measures noise power and interference power, the mobile terminal 50 sends signals indicating the noise power and the interference power to the radio base station 22 to which the mobile terminal 50 is connected. Coordinating radio base stations 22 mutually signal the optimum receiving beamforming estimation matrixes measured at mobile terminals by using the inter-base-station communication sections 46.

In the precoding matrix $W_1$ generated with either of the above-described precoding methods, the elements $W_{11}$, $W_{12}$, $W_{13}$, $W_{14}$, and $W_{15}$ thereof are matrixes or vectors. The first numeral in the subscript is the ordinal number of the radio base station 22, which means the first radio base station $22_1$, and the second numeral in the subscript is the ordinal number of the mobile terminal 50.

For example, the matrix or the vector $W_{11}$ includes, as elements, transmission weights used to direct the main beam from the first radio base station $22_1$ to the first mobile terminal $50_1$, to which a data signal is to be actually sent, and to direct null beams to the other mobile terminals $50_2$ to $50_5$. In another example, the matrix or the vector $W_{15}$ includes, as elements, transmission weights used to direct the main beam from the first radio base station $22_1$ to the fifth mobile terminal $50_5$, to which a data signal is actually not to be sent, and to direct null beams to the other mobile terminals $50_1$ to $50_4$. In the precoding matrix $W_1$, the first radio base station $22_1$ uses the matrixes or vectors $W_{11}$ and $W_{12}$ suited to direct the main beams to the mobile terminals $50_1$ and $50_2$, to which data signals are to be actually sent, and does not use the other matrixes or vectors $W_{13}$, $W_{14}$, and $W_{15}$. In this manner, the precoding characteristics are calculated such that the main beams are directed to mobile terminals to which data signals are to be sent, and null beams are directed to the other mobile terminals to which data signals are not sent. With the use of the matrix or the vector $W_{11}$ and the matrix or the vector $W_{12}$, the first radio base station $22_1$ can direct the main beams to the first mobile terminal $50_1$ and the second mobile terminal $50_2$ and direct null beams to the third mobile terminal $50_3$, the fourth mobile terminal $50_4$, and the fifth mobile terminal $50_5$. In Fig. 4, an outlined shape of beams B1 emitted by the transmission antennas 44 of the first radio base station $22_1$ according to the precoding matrix generated by the first radio base station $22_1$ is shown.

The other radio base stations 22 (the second radio base station $22_2$ and the third radio base station $22_3$) calculate the precoding matrix $W_2$ and the precoding matrix $W_3$ in the same way. In Fig. 4, an outlined shape of beams $B_2$ emitted by the transmission antennas 44 of the second radio base station $22_2$ according to the precoding matrix generated by the second radio base station $22_2$ and an outlined shape of beams $D_3$ emitted by the transmission antennas 44 of the third radio base station $22_3$ according to the precoding matrix generated by the third radio base station $22_3$ are shown.

In each radio base station 22, after the precoding-characteristics calculation section 30 calculates new precoding matrixes, the new calculated precoding matrixes are used by the precoder 36. In other words, the precoder 36 controls a signal to each transmission antenna 44 according to the transmission weight in the newly calculated precoding matrix. In that state, the radio base station 22 sends data signals (with which the reference signal is combined) to transmission-destination mobile terminals 50. However, as described above, the reference signal not combined with the data signals is also received by mobile terminals 50 not connected to the radio base station 22 and is used to generate a channel impulse matrix.

In each mobile terminal 50, after the channel estimating section 64 estimates a new channel impulse matrix, the new estimated channel impulse matrix is used by the signal separation section 56 for signal separation.

The processes from calculating the channel impulse matrixes according to the reference signal in each mobile terminal 50 to calculating the precoding matrixes are periodically repeated. Therefore, each radio base station 22 executes optimum precoding continuously.

In the present embodiment, the plurality of radio base stations 22 share channel impulse matrixes before the radio base stations 22 calculate the optimum receiving beamforming estimation matrixes. However, the plurality of radio base stations 22 may share channel impulse matrixes after or at the same time as the radio base stations 22 calculate the optimum receiving beamforming estimation matrixes. In other words, the inter-base-station communication section 46 may signal together the channel impulse matrix and the optimum receiving beamforming estimation matrix held by the radio base station 22 provided with the inter-base-station communication section 46 to another radio base station 22, and may receive the channel impulse matrixes for other mobile terminals 50 and the optimum receiving beamforming estimation matrixes for the other mobile terminals 50 from the other radio base stations 22.

When the third mobile terminal $50_3$ moves from the state shown in Fig. 4 and is connected to the first radio base station $22_1$ in addition to the second radio base station $22_2$, the second radio base station $22_2$ continues to calculate in the same way as before, from the channel impulse matrix $H_{23}$, the optimum receiving beamforming estimation matrix $\hat{U}_{23}$. The first radio base station $22_1$ also starts to calculate, from the channel impulse matrix $H_{13}$, the optimum receiving beamforming estimation matrix $\hat{U}_{13}$.

In the same way as before, the second radio base station $22_2$ calculates the precoding matrix $W_2$ such that

the main beams are directed to the third mobile terminal $50_3$ and the fourth mobile terminal $50_4$, and null beams are directed to the first mobile terminal $50_1$ and the second mobile terminal $50_2$. In contrast, the first radio base station $22_1$ calculates the precoding matrix $W_1$ such that the main beams are directed not only to the first mobile terminal $50_1$ and the second mobile terminal $50_2$ but also to the third mobile terminal $50_3$, and null beams are directed to the fourth mobile terminal $50_4$ and the fifth mobile terminal $50_5$, and uses the matrixes or vectors $W_{11}$, $W_{12}$, and $W_{13}$ in the precoding matrix.

As described above, in the present embodiment, the optimum receiving beamforming characteristics are estimated for each mobile terminal according to the channel impulse characteristics of the downlink through which the mobile terminal actually receives a data signal, among the channel impulse characteristics of downlinks. In other words, it is assumed that, in order that each mobile terminal receive a downlink data signal from a radio base station that actually sends the data signal to the mobile terminal, the optimum receiving beamforming is performed only for the connected radio base station. The optimum receiving beamforming characteristics are estimated for each mobile terminal according to the channel impulse characteristics required under that assumption. The optimum receiving beamforming characteristics estimated in this way are shared by a plurality of radio base stations. According to the optimum receiving beamforming characteristics (including the optimum receiving beamforming characteristics for transmission-destination mobile terminals to which the radio base station actually sends data signals and the optimum receiving beamforming characteristics for mobile terminals to which the radio base station does not send data signals), the radio base station calculates the precoding characteristics for each mobile terminal such that the main beams are directed to the mobile terminals to which the radio base station sends data signals and null beams are directed to other mobile terminals to which data signals are not sent. Therefore, the precoding characteristics calculated in the radio base station match the optimum receiving beamforming characteristics for the mobile terminals. In CS/CB in downlink CoMP, it is possible to increase the calculation precision of the precoding characteristics for each mobile terminal.

The precoding characteristics for each mobile terminal are calculated according to the optimum receiving beamforming characteristics for transmission-destination mobile terminals to which each radio base station actually sends data signals, the channel impulse characteristics of the downlinks through which the radio base station actually sends the data signals to the transmission-destination mobile terminals, the optimum receiving beamforming characteristics for other mobile terminals to which the radio base station does not actually send the data signals, and the channel impulse characteristics of the downlinks to the other mobile terminals. By calculating the precoding characteristics in this manner, the radio base station can have high-precision precoding characteristics.

Second embodiment

In the first embodiment, each of the radio base stations 22 calculates the optimum receiving beamforming estimation matrixes only for the mobile terminals 50 to which the radio base station 22 is connected, and signals the optimum receiving beamforming estimation matrixes to other coordinating radio base stations 22.

In a second embodiment of the present invention, each of radio base stations 22 calculates not only the optimum receiving beamforming characteristics for the mobile terminals 50 to which the radio base station 22 is connected, but also the optimum receiving beamforming estimation matrixes for mobile terminals 50 to which other coordinating radio base stations 22 are connected. In that case, the radio base stations 22 can recognize, independently of each other, the optimum receiving beamforming estimation matrixes for mobile terminals 50 located in a plurality of cells. In other words, estimating the optimum receiving beamforming characteristics and sharing the optimum receiving beamforming characteristics among coordinating radio base stations 22 are achieved when each of the radio base stations 22 estimates the optimum receiving beamforming characteristics for the transmission-destination mobile terminals 50 to which the radio base station 22 actually sends data signals, according to the channel impulse characteristics of the downlinks between the transmission-destination mobile terminals 50 and the radio base station 22, and also estimates the optimum receiving beamforming characteristics for other mobile terminals 50 according to the channel impulse characteristics of the downlinks between the other mobile terminals 50 and other coordinating radio base stations 22.

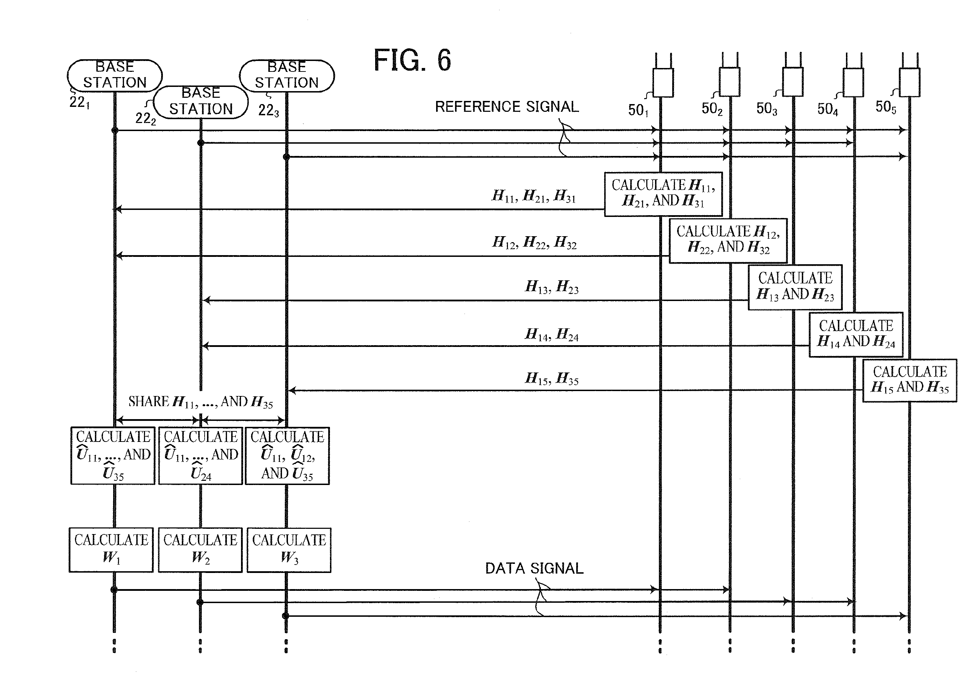

Fig. 6 is an information flow diagram showing an outline of a radio communication control method according to the second embodiment. As shown in Fig. 6, each mobile terminal 50 sends a signal indicating a plurality of channel impulse matrixes calculated therein according to reference signals to the radio base station 22 to which the mobile terminal 50 is connected, in the same way as in the first embodiment. Coordinating radio base stations 22 mutually signal the channel impulse matrixes reported from the mobile terminals 50 with the inter-base-station communication sections 46. Thus, the channel impulse matrixes calculated in the mobile terminals 50 are shared by the coordinating radio base stations 22.

Next, according to the channel impulse matrix of the downlink between the transmission-destination mobile terminal 50 to which the radio base station 22 actually sends a data signal and the radio base station 22, the receiving-beamforming-characteristics estimating section 28 of the radio base station 22 estimates optimum receiving beamforming characteristics for the transmission-destination mobile terminal 50, and also estimates optimum receiving beamforming characteristics for another mobile terminal 50 according to the channel impulse matrix of the downlink between the other mobile terminal 50 and another coordinating radio base station 22.

For example, according to the channel impulse matrix $H_{11}$ of the downlink between the first radio base station $22_1$ and the first mobile terminal $50_1$, under the assumption that the first mobile terminal $50_1$ performs optimum receiving beamforming in order to receive a downlink data signal from the first radio base station $22_1$, the first radio base station $22_1$ calculates an optimum receiving beamforming estimation matrix $\hat{U}_{11}$ for the first mobile terminal $50_1$. According to the channel impulse matrix $H_{12}$ of the downlink between the first radio base station $22_1$ and the second mobile terminal $50_2$, under the assumption that the second mobile terminal $50_2$ performs optimum receiving beamforming in order to receive a downlink data signal from the first radio base station $22_1$, the first radio base station $22_1$ calculates an optimum receiving beamforming estimation matrix $\hat{U}_{12}$ for the second mobile terminal $50_2$. According to the channel impulse matrix $H_{23}$ of the downlink between the second radio base station $22_2$ and the third mobile terminal $50_3$, under the assumption that the third mobile terminal $50_3$ performs optimum receiving beamforming in order to receive a downlink data signal from the second radio base station $22_2$, the first radio base station $22_1$ calculates an optimum receiving beamforming estimation matrix $\hat{U}_{23}$ for the third mobile terminal $50_3$. In the same way, the first radio base station $22_1$ calculates an optimum receiving beamforming estimation matrix $\hat{U}_{24}$ for the fourth mobile terminal $50_4$ and calculates an optimum receiving beamforming estimation matrix $\hat{U}_{35}$ for the fifth mobile terminal $50_5$.

Thus, the coordinating radio base stations 22 can share the optimum receiving beamforming characteristics. The specific calculation method for the optimum receiving beamforming estimation matrix may be the same as in the first embodiment. Then, the precoding-characteristics calculation section 30 of each radio base station 22 calculates the precoding matrixes in the same way as in the first embodiment.

In each radio base station 22, after the precoding-characteristics calculation section 30 calculates new precoding matrixes, the new calculated precoding matrixes are used by the precoder 36. In each mobile terminal 50, when the channel estimating section 64 estimates a new channel impulse matrix, the new estimated channel impulse matrix is used by the signal separation section 56 for signal separation. The processes from calculating the channel impulse matrixes according to the reference signal in each mobile terminal 50 to calculating the precoding matrixes are periodically repeated. The second embodiment also achieves the same advantages as the first embodiment.

In the second embodiment, the radio base stations 22 and the mobile terminals 50 may be the same as those shown in Fig. 2 and Fig. 3 in the first embodiment. However, the radio base stations 22 do not mutually signal the optimum receiving beamforming estimation matrixes by using the inter-base-station communication sections 46.

Third embodiment

In the first embodiment, each of the radio base stations 22 calculates the optimum receiving beamforming estimation matrixes only for the mobile terminals 50 to which the radio base station 22 is connected, and signals the optimum receiving beamforming estimation matrixes to other coordinating radio base stations 22.

In a third embodiment of the present invention, according to the channel impulse matrix of the downlink through which each mobile terminal 50 actually receives a data signal among the channel impulse matrixes calculated by the mobile terminal 50, each mobile terminal 50 estimates optimum receiving beamforming characteristics for the mobile terminal 50. When each mobile terminal 50 reports the optimum receiving beamforming characteristics for the mobile terminal 50 to the radio base station 22, the radio base station 22 signals the optimum receiving beamforming characteristics reported from the mobile terminal 50 to other radio base stations 22 to share it among the coordinating radio base stations 22. In other words, each mobile terminal 50 may estimate optimum receiving beamforming characteristics for the mobile terminal 50 according to the channel impulse characteristics calculated in the mobile terminal 50. In that case, each mobile terminal 50 estimates, independently from each other, the optimum receiving beamforming characteristics for the mobile terminal 50 and reports the optimum receiving beamforming characteristics to the radio base station 22 to which the mobile terminal 50 is connected. When each radio base station 22 signals the optimum receiving beamforming characteristics reported from the mobile terminal 50 to other radio base stations 22, each of the coordinating radio base stations can recognize the optimum receiving beamforming characteristics for the mobile terminals 50 connected to the other radio base stations 22.

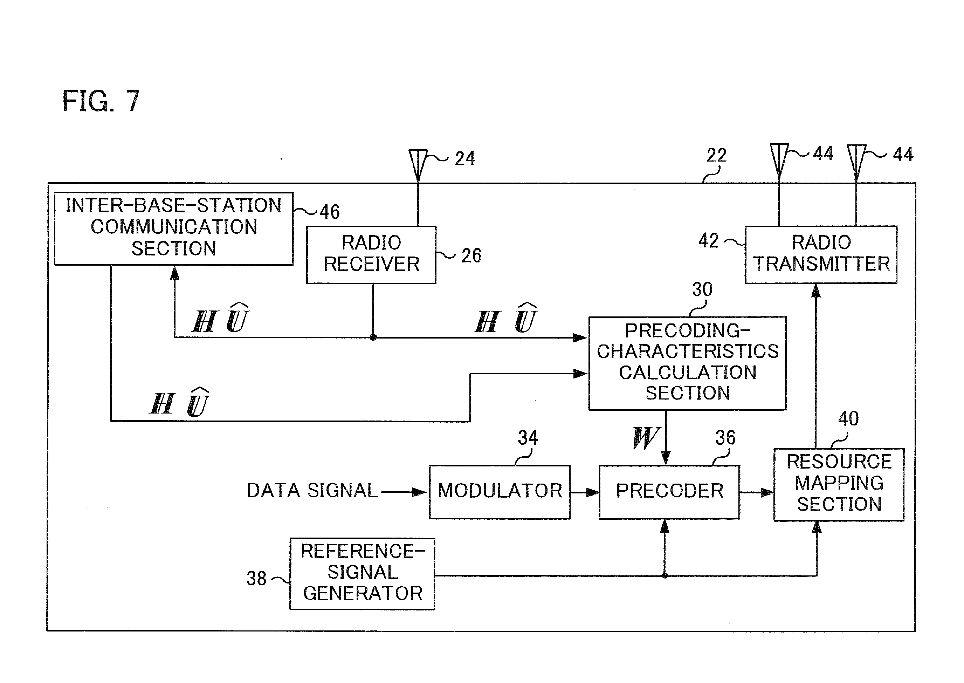

As shown in Fig. 7, a radio base station 22 according to the third embodiment does not have the receiving-beamforming-characteristics estimating section 28. The channel impulse matrix and the optimum receiving beamforming estimation matrix received by the radio receiver 26 are supplied to the precoding-characteristics calculation section 30, and are also signaled to other radio base stations 22 through the inter-base-station communication section 46. The channel impulse matrixes and the optimum receiving beamforming estimation matrixes received from other radio base stations 22 by the inter-base-station communication section 46 are supplied to the precoding-characteristics calculation section 30.

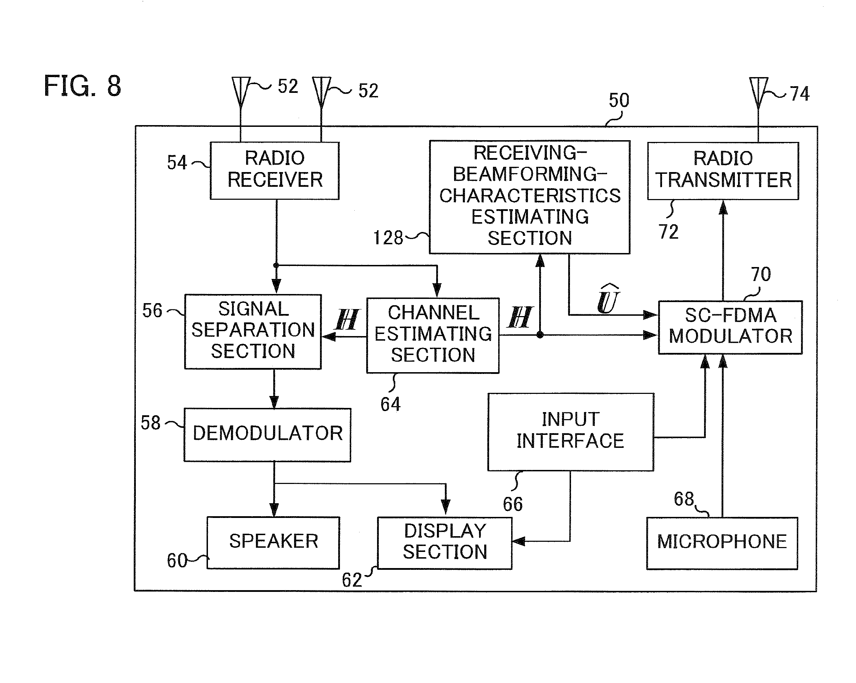

As shown in Fig. 8, a mobile terminal 50 according to the third embodiment includes a receiving-beamforming-characteristics estimating section 128. The receiving-beamforming-characteristics estimating section 128 calculates an optimum receiving beamforming estimation matrix for the mobile terminal 50 according to the channel impulse matrix of the downlink through which the mobile terminal 50 actually receives the data signal among the channel impulse matrixes calculated in the channel estimating section 64. The calculated optimum receiving beamforming estimation matrix is supplied to the SC-FDMA modulator 70 and is further sent by radio to the radio base station 22 to which the mobile terminal 50 is connected, by the radio transmitter 72 (reporting section).

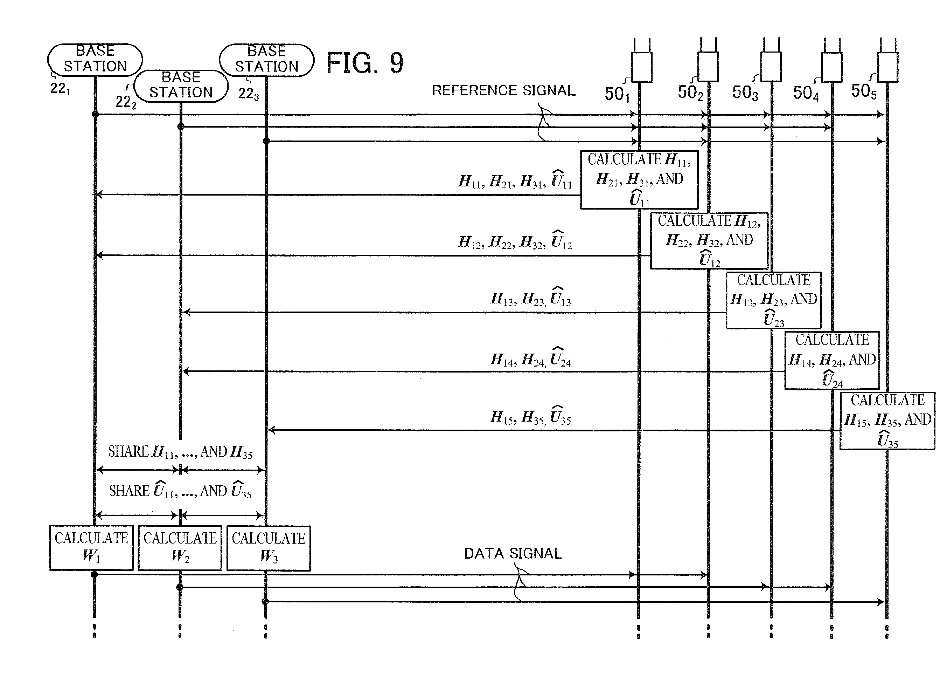

Fig. 9 is an information flow diagram showing an outline of a radio communication control method according to the third embodiment. As shown in Fig. 9, each mobile terminal 50 calculates a plurality of channel impulse matrixes according to reference signals, in the same way as in the first embodiment. The receiving-beamforming-characteristics estimating section 128 of the mobile terminal 50 estimates optimum receiving beamforming characteristics for the mobile terminal 50 according to the channel impulse matrix of the downlink between the mobile terminal 50 and the connected radio base station 22 from which the mobile terminal 50 actually receives the data signal. The specific calculation method for the optimum receiving beamforming estimation matrix may be the same as in the first embodiment.

For example, according to the channel impulse matrix $H_{11}$ of the downlink between the first radio base station $22_1$ and the first mobile terminal $50_1$, under the assumption that the first mobile terminal $50_1$ performs optimum receiving beamforming in order to receive a downlink data signal from the first radio base station $22_1$, the first mobile terminal $50_1$ calculates an optimum receiving beamforming estimation matrix $\hat{U}_{11}$ for the first mobile terminal $50_1$. According to the channel impulse matrix $H_{12}$ of the downlink between the first radio base station $22_1$ and the second mobile terminal $50_2$, under the assumption that the second mobile terminal $50_2$ performs optimum receiving beamforming in order to receive a downlink data signal from the first radio base station $22_1$, the second mobile terminal $50_2$ calculates an optimum receiving beamforming estimation matrix $\hat{U}_{12}$ for the second mobile terminal $50_2$.

Each mobile terminal 50 sends signals indicating the plurality of channel impulse matrixes and the single optimum receiving beamforming estimation matrix calculated in the mobile terminal 50 to the radio base station 22 to which the mobile terminal 50 is connected. The channel impulse matrixes and the optimum receiving beamforming estimation matrix may be indicated in one signal, or may be indicated in separate signals and sent at different timing.

The coordinating radio base stations 22 mutually signal the channel impulse matrixes and the optimum receiving beamforming estimation matrix reported from the mobile terminals 50, by using the inter-base-station communication section 46. In this way, the channel impulse matrixes and the optimum receiving beamforming estimation matrix calculated in each mobile terminal 50 are shared by the coordinating radio base stations 22. The channel impulse matrixes and the optimum receiving beamforming estimation matrix may be indicated in one signal, or may be indicated in separate signals and sent at different timing.

Then, the precoding-characteristics calculation section 30 of each radio base station 22 calculates the precoding matrixes in the same way as in the first embodiment.

In each radio base station 22, after the precoding-characteristics calculation section 30 calculates new precoding matrixes, the new calculated precoding matrixes are used by the precoder 36. In each mobile terminal 50, when the channel estimating section 64 estimates a new channel impulse matrix, the new estimated channel impulse matrix is used by the signal separation section 56 for signal separation. The processes from calculating the channel impulse matrixes according to the reference signals in each mobile terminal 50 to calculating the precoding matrixes are periodically repeated. The third embodiment also achieves the same advantages as the first embodiment.

Other modifications

In the radio base stations 22 and the mobile terminals 50, the functions executed by the CPU may be executed by hardware or a programmable logic device, such as an FPGA (Field Programmable Gate Array) or a DSP (Digital Signal Processor), instead of the CPU.

In the above-described embodiments, the channel impulse characteristics, the optimum receiving beamforming estimation characteristics, and the precoding characteristics are expressed by matrixes (the optimum receiving beamforming estimation vector can be also regarded as a matrix having a single column). However, at least one of these characteristics may be expressed by something other than a matrix, and the precoding characteristics may be calculated by a mathematical method other than matrix calculation.

Each radio base station 22 may have a sector. In each radio base station 22, the receiving antenna 24 may also be used as one of the transmission antennas 44. In each mobile terminal 50, the transmission antenna 74 may also be used as one of the receiving antennas 52.

The above-described embodiments and modifications may be combined so long as no contradiction occurs.

Reference Numerals

| | |
|---|---|
| 10: | Core network |
| 20: | Radio access network |
| 2X: | X2 interface |

(continued)

| | |
|---|---|
| 22 ($22_1$, $22_2$, $22_3$): | Radio base stations |
| 23: | Cell |
| 24: | Receiving antenna |
| 26: | Radio receiver |
| 28: | Receiving-beamforming-characteristics estimating section |
| 30: | Precoding-characteristics calculation section |
| 34: | Modulator |
| 36: | Precoder |
| 38: | Reference-signal generator |
| 40: | Resource mapping section |
| 42: | Radio transmitter |
| 44: | Transmission antennas |
| 46: | Inter-base-station communication section |
| 50 ($50_1$, $50_2$, $50_3$, $50_4$, $50_5$) : | Mobile terminals |
| 52: | Receiving antennas |
| 54: | Radio receiver |
| 56: | Signal separation section |
| 58: | Demodulator |
| 60: | Speaker |
| 62: | Display section |
| 64: | Channel estimating section |
| 66: | Input interface |
| 68: | Microphone |
| 70: | SC-FDMA modulator |
| 72: | Radio transmitter (reporting section) |
| 74: | Transmission antenna |
| 128: | Receiving-beamforming-characteristics estimating section |

**Claims**

1. A radio communication control method executed in a radio communication system provided with a plurality of mobile terminals and a plurality of radio base stations communicating with the mobile terminals by radio, the radio communication control method comprising:

   calculating, in each of the mobile terminals, channel impulse characteristics of downlinks from the radio base stations to the mobile terminal;
   estimating optimum receiving beamforming characteristics for each of the mobile terminals according to, among the channel impulse characteristics, the channel impulse characteristics of the downlink through which the mobile terminal actually receives a data signal;
   sharing the optimum receiving beamforming characteristics for each of the mobile terminals among some of the plurality of radio base stations; and
   calculating, in each of the some of the plurality of radio base stations that share the optimum receiving beamforming characteristics, precoding characteristics for each of the mobile terminals according to the optimum receiving beamforming characteristics such that main beams are directed to mobile terminals to which the radio base station sends data signals and null beams are directed to mobile terminals to which the radio base station does not send data signals.

2. The radio communication control method according to Claim 1, wherein the precoding characteristics are calculated for each of the mobile terminals, in each of the some of the plurality of radio base stations, according to the optimum receiving beamforming characteristics for transmission-destination mobile terminals to which the radio base station actually sends data signals, the channel impulse characteristics of the downlinks through which the radio base station actually sends the data signals to the transmission-destination mobile terminals, the optimum receiving beamforming characteristics for other mobile terminals to which the radio base station does not actually send data signals, and the channel impulse characteristics of the downlinks to the other mobile terminals.

3. The radio communication control method according to Claim 1, wherein estimating the optimum receiving beamforming characteristics is that each of the radio base stations estimates the optimum receiving beamforming characteristics for transmission-destination mobile terminals to which the radio base station actually sends data signals, according to the channel impulse characteristics of the downlinks between the transmission-destination mobile terminals and the radio base station, the channel impulse characteristics being reported from the transmission-destination mobile terminals to the radio base station, and

sharing the optimum receiving beamforming characteristics is that each of the some of the plurality of radio base stations signals the estimated optimum receiving beamforming characteristics to another radio base station of the some of the plurality of radio base stations.

4. The radio communication control method according to Claim 1, wherein estimating the optimum receiving beamforming characteristics and sharing the optimum receiving beamforming characteristics are achieved by that each of the radio base stations estimates the optimum receiving beamforming characteristics for transmission-destination mobile terminals to which the radio base station actually sends data signals, according to the channel impulse characteristics of the downlinks between the transmission-destination mobile terminals and the radio base station, and also estimates the optimum receiving beamforming characteristics for other mobile terminals according to the channel impulse characteristics of the downlinks between the other mobile terminals and another radio base station.

5. The radio communication control method according to Claim 1, wherein estimating the optimum receiving beamforming characteristics is that each of the mobile terminals estimates the optimum receiving beamforming characteristics for the mobile terminal according to the channel impulse characteristics of the downlink through which the mobile terminal actually receives a data signal among the channel impulse characteristics calculated by the mobile terminal, and

sharing the optimum receiving beamforming characteristics comprises that each of the mobile terminals reports the optimum receiving beamforming characteristics for the mobile terminal to a radio base station, and the radio base station signals the optimum receiving beamforming characteristics reported from the mobile terminal to another radio base station.

6. The radio communication control method according to Claim 1, wherein the channel impulse characteristics are calculated as a channel impulse matrix, and

the optimum receiving beamforming characteristics are expressed as a receiving beamforming vector or a receiving beamforming matrix formed of one or more vectors constituting a unitary matrix obtained by applying singular value decomposition to the channel impulse matrix.

7. The radio communication control method according to Claim 1, wherein the precoding characteristics are calculated by using zero-forcing precoding.

8. The radio communication control method according to Claim 1, wherein the precoding characteristics are calculated by using minimum mean square error (MMSE) precoding.

9. A radio communication system comprising:

a plurality of mobile terminals; and
a plurality of radio base stations communicating with the mobile terminals by radio;
each of the mobile terminals comprising a channel estimating section that calculates channel impulse characteristics of downlinks from the radio base stations to the mobile terminal;
the system comprising a receiving beamforming characteristics estimating section that estimates optimum receiving beamforming characteristics for each of the mobile terminals according to, among the channel impulse characteristics, the channel impulse characteristics of the downlink through which the mobile terminal actually receives a data signal; and
each of the radio base stations that share the optimum receiving beamforming characteristics comprising a precoding-characteristics calculation section that calculates precoding characteristics for each of the mobile terminals according to the optimum receiving beamforming characteristics such that main beams are directed to mobile terminals to which the radio base station sends data signals and null beams are directed to mobile terminals to which the radio base station does not send data signals.

**10.** The radio communication system according to Claim 9, wherein the precoding-characteristics calculation section in each of the radio base stations calculates the precoding characteristics for each of the mobile terminals by using the optimum receiving beamforming characteristics for transmission-destination mobile terminals to which the radio base station actually sends data signals, the channel impulse characteristics of the downlinks through which the radio base station actually sends the data signals to the transmission-destination mobile terminals, the optimum receiving beamforming characteristics for other mobile terminals to which the radio base station does not actually send data signals, and the channel impulse characteristics of the downlinks to the other mobile terminal.

**11.** The radio communication system according to Claim 9, wherein each of the radio base stations comprises the receiving beamforming characteristics estimating section, and the receiving beamforming characteristics estimating section estimates the optimum receiving beamforming characteristics for transmission-destination mobile terminals to which the radio base station provided with the receiving beamforming characteristics estimating section actually sends data signals, according to the channel impulse characteristics of the downlinks between the transmission-destination mobile terminals and the radio base station, the channel impulse characteristics being reported from the transmission-destination mobile terminals to the radio base station, and

each of the radio base stations comprises an inter-base-station communication section that signals the optimum receiving beamforming characteristics estimated by the receiving beamforming characteristics estimating section of the radio base station to another radio base station and receives the optimum receiving beamforming characteristics for other mobile terminals sent from another radio base station.

**12.** The radio communication system according to Claim 9, wherein each of the radio base stations comprises the receiving beamforming characteristics estimating section, and the receiving beamforming characteristics estimating section estimates the optimum receiving beamforming characteristics for transmission-destination mobile terminals to which the radio base station provided with the receiving beamforming characteristics estimating section actually sends data signals, according to the channel impulse characteristics of the downlinks between the transmission-destination mobile terminals and the radio base station, and also estimates the optimum receiving beamforming characteristics for other mobile terminals according to the channel impulse characteristics of the downlinks between the other mobile terminals and another coordinating radio base station.

**13.** The radio communication system according to Claim 9, wherein each of the mobile terminals comprises the receiving beamforming characteristics estimating section, and the receiving beamforming characteristics estimating section estimates the optimum receiving beamforming characteristics for the mobile terminal provided with the receiving beamforming characteristics estimating section according to the channel impulse characteristics of the downlink through which the mobile terminal provided with the receiving beamforming characteristics estimating section actually receives a data signal among the channel impulse characteristics calculated by the channel estimating section of the mobile terminal provided with the receiving beamforming characteristics estimating section;

each of the mobile terminals comprises a reporting section that reports the optimum receiving beamforming characteristics to a radio base station; and

each of the radio base stations comprises an inter-base-station communication section that signals, to another radio base station, the optimum receiving beamforming characteristics reported from the mobile terminal.

**14.** A radio base station communicating with a plurality of mobile terminals by radio, the radio base station comprising:

a receiving beamforming characteristics estimating section that estimates optimum receiving beamforming characteristics for transmission-destination mobile terminals to which the radio base station actually sends data signals, according to channel impulse characteristics of downlinks between the radio base station and the transmission-destination mobile terminals, the channel impulse characteristics being reported from the transmission-destination mobile terminals;

an inter-base-station communication section that signals the optimum receiving beamforming characteristics estimated by the receiving beamforming characteristics estimating section to another radio base station and receives optimum receiving beamforming characteristics for other mobile terminals from another radio base station; and

a precoding-characteristics calculation section that calculates precoding characteristics for each of the mobile terminals according to the optimum receiving beamforming characteristics for the transmission-destination mobile terminals estimated by the receiving beamforming characteristics estimating section and the optimum receiving beamforming characteristics for the other mobile terminals received from the other radio base station such that main beams are directed to the transmission-destination mobile terminals and null beams are directed to mobile terminals to which the radio base station does not send data signals.

**15.** A radio base station communicating with a plurality of mobile terminals by radio, the radio base station comprising:

a receiving beamforming characteristics estimating section that estimates optimum receiving beamforming characteristics for transmission-destination mobile terminals to which the radio base station actually sends data signals, according to channel impulse characteristics of downlinks between the radio base station and the transmission-destination mobile terminals and estimates optimum receiving beamforming characteristics for other mobile terminals according to channel impulse characteristics of downlinks between another radio base station and the other mobile terminals; and

a precoding-characteristics calculation section that calculates precoding characteristics for each of the mobile terminals according to the optimum receiving beamforming characteristics for transmission-destination mobile terminals estimated by the receiving beamforming characteristics estimating section and the optimum receiving beamforming characteristics for the other mobile terminals such that main beams are directed to the transmission-destination mobile terminal and null beams are directed to mobile terminals to which the radio base station does not send data signals.

**16.** A mobile terminal capable of communicating with a plurality of radio base stations by radio, the mobile terminal comprising:

a channel estimating section that calculates channel impulse characteristics of downlinks from the radio base stations to the mobile terminal;

a receiving beamforming characteristics estimating section that estimates optimum receiving beamforming characteristics for the mobile terminal according to channel impulse characteristics of a downlink through which the mobile terminal actually receives data signals, among the channel impulse characteristics calculated by the channel estimating section; and

a reporting section that reports the optimum receiving beamforming characteristics to a radio base station.

FIG. 1

FIG. 2

FIG. 2

INTER-BASE-STATION COMMUNICATION SECTION ~46

RADIO RECEIVER ~26

~24

22

~44 ~44

42~ RADIO TRANSMITTER

$\mathbb{H}$

$\mathbb{H}$

$\mathbb{H}$

$\widehat{U}$

RECEIVING-BEAMFORMING-CHARACTERISTICS ESTIMATING SECTION

$\widehat{U}$

30

PRECODING-CHARACTERISTICS CALCULATION SECTION

$\mathbb{H}\,\widehat{U}$

$W$

36

40

DATA SIGNAL → MODULATOR 34 → PRECODER → RESOURCE MAPPING SECTION

38~ REFERENCE-SIGNAL GENERATOR

EP 2 618 500 A1

FIG. 3

EP 2 618 500 A1

FIG. 4

FIG. 5

EP 2 618 500 A1

# FIG. 6

# FIG. 7

INTER-BASE-STATION COMMUNICATION SECTION ~46

RADIO RECEIVER ~26

~24

22

~44  ~44

42~ RADIO TRANSMITTER

$\mathbb{H}$ $\widehat{U}$

$\mathbb{H}$ $\widehat{U}$

PRECODING-CHARACTERISTICS CALCULATION SECTION

30

$\mathbb{H}$ $\widehat{U}$

$\mathbb{W}$

DATA SIGNAL ⟶ MODULATOR

34

PRECODER

36

RESOURCE MAPPING SECTION

40

38~ REFERENCE-SIGNAL GENERATOR

EP 2 618 500 A1

FIG. 8

EP 2 618 500 A1

FIG. 9

REFERENCE SIGNAL

SHARE $H_{11}, ..., $ AND $H_{35}$

SHARE $\widehat{U}_{11}, ..., $ AND $\widehat{U}_{35}$

DATA SIGNAL

EP 2 618 500 A1

<table>
<tr><td colspan="2" align="center">**INTERNATIONAL SEARCH REPORT**</td><td>International application No.<br>PCT/JP2011/069958</td></tr>
</table>

| A. CLASSIFICATION OF SUBJECT MATTER |
|---|
| *H04B7/10*(2006.01)i, *H04J99/00*(2009.01)i, *H04W16/28*(2009.01)i |

According to International Patent Classification (IPC) or to both national classification and IPC

| B. FIELDS SEARCHED |
|---|
| Minimum documentation searched (classification system followed by classification symbols)<br>H04B7/10, H04J99/00, H04W16/28 |

Documentation searched other than minimum documentation to the extent that such documents are included in the fields searched

| Jitsuyo Shinan Koho | 1922-1996 | Jitsuyo Shinan Toroku Koho | 1996-2011 |
|---|---|---|---|
| Kokai Jitsuyo Shinan Koho | 1971-2011 | Toroku Jitsuyo Shinan Koho | 1994-2011 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| Y | JP 2010-171734 A (Kyocera Corp.),<br>05 August 2010 (05.08.2010),<br>entire text; particularly, paragraphs [0050] to [0052]<br>& WO 2010/084937 A1 | 1-16 |
| Y | JP 2006-319959 A (Matsushita Electric Industrial Co., Ltd.),<br>24 November 2006 (24.11.2006),<br>entire text<br>& US 2009/0279486 A1 & WO 2006/109786 A1<br>& CN 101156335 A | 1-16 |

☐ Further documents are listed in the continuation of Box C.   ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>22 September, 2011 (22.09.11) | Date of mailing of the international search report<br>04 October, 2011 (04.10.11) |
|---|---|
| Name and mailing address of the ISA/<br>Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- 3rd Generation Partnership Project; Technical Specification Group Radio Access Network. *3GPP TR 36.814 V9.0.0,* March 2010
- Further advancements for E-UTRA physical layer aspects. *Evolved Universal Terrestrial Radio Access (E-UTRA,* March 2010

- An Introduction to the Multi-User MIMO Downlink, Quentin H. Spencer and three others. *IEEE Communications Magazine,* October 2004, 60-67